# DEMANDE DE BREVET EUROPEEN

(11) **EP 3 564 452 A1**
(43) Date de publication de la demande: **06.11.2019**
(21) Numéro de dépôt: 19164875.7
(22) Date de dépôt: 25.03.2019
(51) Int. Cl.: E03F 1/00, E03B 3/03, E03F 5/10, E02D 29/045

(54) **STRUCTURE TRIDIMENSIONNELLE A MONTER POUR COMBLER UN BASSIN ENTERRE DE RETENTION DES EAUX DE PLUIE**

(30) Priorité: 03.05.2018 FR 1853801
(71) Demandeur: Rehau Tube Sarl, 18570 La Chapelle Saint-Ursin (FR)
(72) Inventeur: PENNERATH, Eddy, 57450 HENRIVILLE (FR)
(74) Mandataire: Merckling, Norbert

(57) **Abrégé**

La structure tridimensionnelle (1) est formée de modules unitaires (2) mutuellement assemblés en juxtaposition et/ou superposition, comportant chacun un unique tube vertical (11) au niveau de l'extrémité supérieure duquel est monté un embout d'extrémité (12) pour la réception du tube vertical (11) d'un autre module unitaire (2) situé au-dessus. Cet embout d'extrémité (12) comporte des paliers de fixation de poutrelle pour la fixation de poutrelles (16) horizontales formant un cadre de support pour une grille (24) prévue en partie supérieure de chaque module unitaire (2). Les modules unitaires (2) posés au sol comportent une base (3) servant d'embase d'appui au sol. Chaque tube vertical (11) peut comporter un ou plusieurs paliers de fixation de béquille pour le montage incliné de béquilles obliques (27) de rigidification qui relient chacune le tube vertical (11) de deux modules unitaires (2) adjacents.

## Description

### Domaine technique

La présente invention se rapporte à une structure tridimensionnelle prévue pour combler un bassin enterré d'infiltration, de rétention et/ou de stockage des eaux de pluie.

L'invention concerne plus particulièrement une telle structure tridimensionnelle formée d'éléments en matière plastique et en matériaux composites qui peuvent être préassemblés en usine ou assemblés sur site.

### Etat de la technique

Lors de la construction d'ouvrages tels que des parkings ou des zones industrielles, certaines réglementations imposent la construction d'un bassin enterré d'infiltration, de rétention et/ou de stockage des eaux de pluie dans le sol où sont prévus lesdits ouvrages.

Ces bassins sont habituellement sous la forme d'installations alvéolaires prévues dans une fosse creusée sous l'ouvrage et comportant un grand volume vide prévu pour l'infiltration, la rétention et le stockage des eaux de pluie. Ces installations alvéolaires sont suffisamment robustes mécaniquement pour supporter le poids de la masse de terre située au-dessus d'elles ainsi que pour supporter le poids de l'ouvrage qui est prévu en surface.

Le déposant commercialise déjà une structure tridimensionnelle intitulée RAUSIKKO Box prévue pour la rétention et la restitution des eaux de pluie soit par infiltration ou débit limité ou régulé. Cette solution consiste à utiliser des plateformes en matière plastique empilables pour leur transport, et qui sont assemblées entres elles afin de former un volume comportant de nombreux espaces creux. Il s'agit avantageusement d'un système qui peut être mis en oeuvre de façon flexible et pérenne dans toutes les configurations imaginables. Ces modules auto-fixants permettent de répondre à toutes les contraintes de chantier : grande modularité, résistance mécanique élevée et exploitation facilitée du système. Les plateformes connues en matière plastique sont très encombrantes pour leur transport, et ce malgré leur caractère empilable. Le temps de montage nécessaire pour assembler ces plateformes est également peu avantageux.

Par la demande PCT WO 2014/161039 au nom de STRATA INNOVATION, on connait une structure unitaire prévue pour former une structure tridimensionnelle par la superposition verticale de plusieurs structures unitaires et par l'assemblage dans un plan horizontal de plusieurs structures unitaires au moyen de bras horizontaux. Chaque structure unitaire comporte quatre jambes reliées entre elles par des traverses. Chaque jambe comporte deux pièces d'engagement conformées d'une seule pièce sur les flancs latéraux de ladite jambe, ces pièces d'engagement servant par paire à la réception d'un bras horizontal. Ainsi, les jambes, traverses et pièces d'engagement de chaque structure unitaire sont d'une seule pièce et ne sont pas sous la forme d'éléments à assembler. Les jambes d'une structure unitaire présentent donc une hauteur fixe qu'il n'est pas possible de modifier. Ce type de structure unitaire n'est donc pas adapté, car trop coûteux, dans le cas de l'assemblage d'une structure tridimensionnelle de grande hauteur, mais reste limité en utilisation à une structure tridimensionnelle formée d'un empilement de deux ou trois structures unitaires maximum.

### Description de l'invention

L'objet de la présente invention vise par conséquent à pallier les inconvénients de l'art antérieur en proposant une nouvelle structure tridimensionnelle à monter pour combler un bassin de rétention des eaux de pluie.

Les objets assignés à l'invention sont atteints à l'aide d'une structure tridimensionnelle comprenant des modules unitaires mutuellement assemblés en juxtaposition et/ou superposition afin de former une masse poreuse en vue de constituer un bassin d'infiltration, de rétention et/ou de stockage des eaux de pluie, caractérisée en ce qu'elle comprend des bases destinées à être posées au sol sensiblement horizontalement, une base équipant la partie inférieure de chaque module unitaire prévu pour être posé directement au sol afin de servir d'embase d'appui au sol pour celui-ci, et en ce que chaque module unitaire comporte les moyens dissociés suivants, qui sont prévus pour être assemblés mutuellement pour le montage de la structure tridimensionnelle :
- un unique tube vertical dont l'extrémité inférieure est prévue pour être logée et immobilisée dans la partie supérieure d'un logement récepteur, ce logement récepteur étant :
   - soit conformé dans une base d'un module unitaire lorsque celui-ci est destiné à être directement posé au sol,
   - soit conformé dans un embout d'extrémité prévu au niveau de l'extrémité supérieure du tube vertical d'un autre module unitaire situé en-dessous lorsque le module unitaire est destiné à être monté au-dessus d'un autre module unitaire ;
- un embout d'extrémité prévu pour être monté sur l'extrémité supérieure du tube vertical et comportant au moins deux paliers de fixation de poutrelle qui s'étendent radialement vers l'extérieur à partir dudit embout d'extrémité ;
- au moins deux poutrelles horizontales dont une première extrémité est fixée à un palier de fixation de poutrelle du tube vertical, tandis que son autre extrémité est destinée à être fixée à un palier de fixation de poutrelle d'un tube vertical d'un autre module unitaire adjacent, ladite poutrelle étant positionnée horizontale entre les deux tubes verticaux ainsi reliés ;
- au moins une grille positionnée sur les au moins deux poutrelles horizontales afin de constituer un plancher de circulation.

Selon un exemple de mise en oeuvre de l'invention, chaque module unitaire comporte en outre les moyens dissociés suivants prévus pour être assemblés mutuellement pour le montage de la structure tridimensionnelle :
- au moins un palier de fixation de béquille solidarisé sur le pourtour externe du tube vertical ;
- au moins une béquille oblique de rigidification dont une première extrémité est fixée à un palier de fixation de béquille du tube vertical, tandis que son autre extrémité est destinée à être fixée à un palier de fixation de béquille du tube vertical d'un autre module unitaire adjacent, ladite béquille oblique étant positionnée inclinée entre les deux tubes verticaux ainsi reliés.

Selon un autre exemple de mise en oeuvre de l'invention, un tube vertical comprend au moins un palier de fixation de béquille au niveau de son extrémité inférieure et/ou au moins un palier de fixation de béquille au niveau de sa moitié supérieure.

Selon un exemple supplémentaire de mise en oeuvre de l'invention, au moins un palier de fixation de béquille est solidarisé sur un tube vertical par soudage ou par collage.

Selon un autre exemple de mise en oeuvre de l'invention, au moins une béquille oblique de rigidification comporte un embout de fixation de béquille solidarisé à au moins une de ses extrémités et prévu pour coopérer avec une forme réceptrice prévue dans un palier de fixation de béquille.

Selon un exemple de mise en oeuvre supplémentaire de l'invention, au moins une poutrelle horizontale comporte un embout de fixation de poutrelle solidarisé à au moins une de ses extrémités et prévu pour coopérer avec un palier de fixation de poutrelle d'un embout d'extrémité.

Selon un exemple de mise en oeuvre de l'invention, la base équipant la partie inférieure de chaque module unitaire prévu pour être posé directement au sol présente un évidement et comporte un logement récepteur dans sa face supérieure.

Selon un autre exemple de mise en oeuvre de l'invention, la base équipant la partie inférieure de chaque module unitaire prévu pour être posé directement au sol comporte une semelle présentant une surface inférieure d'appui plane et horizontale montée sous ladite base et solidarisée à celle-ci.

Selon un exemple supplémentaire de mise en oeuvre de l'invention, la semelle est prévue au niveau du logement récepteur conformé dans la base destinée à être posée au sol.

Selon un exemple de mise en oeuvre de l'invention, la semelle comporte une pièce mâle dans sa partie supérieure, prévue pour être introduite dans une pièce femelle complémentaire conformée dans la partie inférieure du logement récepteur afin d'y être logée et immobilisée.

Selon un autre exemple de mise en oeuvre de l'invention, la base équipant la partie inférieure de chaque module unitaire prévu pour être posé directement au sol est sous la forme d'un cadre de forme générale rectangulaire et préférentiellement carrée.

Selon un exemple supplémentaire de mise en oeuvre de l'invention, la base équipant la partie inférieure de chaque module unitaire prévu pour être posé directement au sol comporte des structures de clipsage, des structures d'emboîtement ou tout autre type de structures d'accrochage, ces structures d'accrochage étant prévues pour assembler les bases de deux modules unitaires adjacents lorsqu'elles sont mutuellement associées.

Selon un exemple de mise en oeuvre de l'invention, la base équipant la partie inférieure de chaque module unitaire prévu pour être posé directement au sol comporte un unique logement récepteur pour la réception de l'unique tube vertical du module unitaire prévu pour être posé au sol.

Selon un autre exemple de mise en oeuvre de l'invention, la grille est de forme générale rectangulaire et préférentiellement carrée, et est d'une seule pièce ou en plusieurs parties juxtaposées.

Selon un exemple supplémentaire de mise en oeuvre de l'invention, la structure tridimensionnelle comprend au moins un tube vertical, au moins une béquille et/ou au moins une poutrelle en matériau composite, de préférence obtenu(e) par pultrusion de fibres de verre continues et de résine.

Selon un exemple de mise en oeuvre de l'invention, la structure tridimensionnelle comprend au moins un embout d'extrémité, au moins une base, au moins une semelle, au moins un palier de fixation de béquille, au moins un embout de fixation de poutrelle et/ou au moins une grille en matière plastique injectée.

Selon un autre exemple de mise en oeuvre de l'invention, chaque embout d'extrémité comporte quatre paliers de fixation de poutrelle régulièrement répartis à un angle de 90° les uns des autres sur le pourtour dudit embout d'extrémité.

Les avantages de la présente invention sont particulièrement nombreux.

Avec une hauteur d'environ 1m60 pour les tubes verticaux et des dimensions d'environ 1m x 1m pour la base destinée à être posée horizontalement, chaque module unitaire permet d'occuper un très grand volume. En outre, du fait que chaque module unitaire ne comporte qu'un seul tube vertical, pour un même volume ou un même poids à transporter avant assemblage, les modules unitaires de l'invention permettent de créer un bassin enterré d'infiltration bien plus grand que les solutions antérieures.

Les modules unitaires de l'invention présentent également bien moins de pièces à assembler que les solutions antérieures pour créer un bassin enterré d'infiltration de volume équivalent.

Par la fourniture des différents paliers de fixation, l'invention est facile et rapide à assembler.

Les béquilles obliques de rigidification permettent notamment de renforcer la solidité globale de la structure tridimensionnelle, notamment dans les parties périphériques de celle-ci ou elle subit une poussée exercée par la masse de terre qui l'entoure. Le fait qu'un module unitaire soit prévu pour pouvoir comporter ou non des béquilles obliques de rigidification permet une grande liberté de conception pour la structure tridimensionnelle, et permet de prévoir des béquilles obliques de rigidification uniquement là où c'est nécessaire au sein de la structure tridimensionnelle.

Le fait que les béquilles obliques de rigidification et/ou les poutrelles horizontales puissent comporter un embout de fixation prévu pour coopérer avec une forme réceptrice prévue respectivement dans les paliers de fixation de béquille et/ou dans les embouts d'extrémité permet d'assembler les béquilles obliques de rigidification et/ou les poutrelles horizontales avec les tubes verticaux de manière rapide, aisée et sécuritaire.

Les tubes, béquilles et poutrelles en matériau composite, de préférence obtenu(e)s par pultrusion de fibres de verre continues et de résine, offrent une très grande résistance mécanique à la structure tridimensionnelle, pour un encombrement, un coût et un poids réduit. Ces éléments tubulaires sont avantageusement légers et ont une très bonne résistance en compression et en flexion.

De même, les embouts d'extrémité, les bases, les semelles, les paliers, les embouts de fixation et les grilles en matière plastique injectée présentent une résistance mécanique suffisante pour leur rôle, avec un coût et un poids réduit. Des nervures de renfort et de rigidification sont avantageusement prévues pour renforcer la résistance mécanique de ces pièces en plastique injecté.

Malgré leur grande solidité, notamment s'ils sont obtenus par pultrusion de fibres de verre et de résine, les tubes verticaux présentent une certaine flexibilité, ce qui autorise un certain jeu mutuel entre les modules unitaires lors de l'assemblage de la structure tridimensionnelle.

Les structures de clipsage, d'emboîtement ou autres structures d'accrochage des bases permettent de raccorder rapidement et facilement les modules unitaires adjacents qui sont posés au sol, tandis que tous les modules unitaires adjacents sont reliés et solidarisés entre eux par les poutrelles horizontales.

Selon un mode de réalisation préféré de l'invention, les moyens constitutifs de chaque module unitaire sont prévus de sorte que chaque module présente une forme générale de parallélépipède, ce qui facilite notamment le montage de la structure tridimensionnelle, et permet de l'étudier et de la concevoir de manière aisée.

Les grilles permettent avantageusement de circuler sur les modules unitaires inférieurs lors de l'assemblage des modules unitaire supérieurs. Elles laissent passer l'eau et offrent également une certaine rigidité à l'ensemble de la structure tridimensionnelle.

Chaque base permet un appui stable sur le sol pour la structure tridimensionnelle et l'empêche de s'enfoncer dans le sol, cet avantage étant encore accru lorsque les bases sont chacune sous la forme d'un cadre de forme générale rectangulaire et/ou lorsque les bases sont équipées d'une semelle. L'évidement des bases, préférentiellement central, permet de les alléger et de laisser passer l'eau.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective d'une structure tridimensionnelle selon l'invention formée de neuf modules unitaires équipés chacun de bases et prévus pour être posés directement au sol, lesquels modules unitaires sont mutuellement assemblés et supportent chacun un autre module unitaire monté au-dessus, pour un total de dix-huit modules unitaires ;
- la figure 2 est une vue en perspective à l'état dissocié d'un module unitaire et d'une base selon l'invention prévus pour être posés directement au sol ;
- la figure 3 est une vue en perspective à l'état dissocié de deux tubes verticaux reliés par une béquille oblique de rigidification au niveau d'un palier de fixation prévu pour être soudé sur chacun des tubes;
- les figures 4a et 4b sont respectivement des vues en perspective trois-quarts de face et de dos d'un embout de fixation de béquille selon l'invention à solidariser au niveau d'une extrémité libre d'une béquille oblique de rigidification ;
- les figures 5a et 5b sont respectivement des vues en perspective trois-quarts de face et de dos d'un palier de fixation de béquille selon l'invention à solidariser sur le pourtour externe d'un tube vertical selon l'invention ;
- les figures 6a et 6b sont respectivement des vues en perspective trois-quarts de face et de dos d'un palier de fixation de poutrelle selon l'invention à solidariser au niveau d'une extrémité libre d'une poutrelle horizontale selon l'invention ;
- les figures 7 à 9 sont des vues en perspective qui illustrent des étapes successives de l'assemblage de modules unitaires selon l'invention ;
- la figure 10 est une vue de profil d'un module unitaire selon l'invention partiellement assemblé;
- la figure 11 est une vue de détail de la partie entouré sur la figure 10 ;
- la figure 12 est une vue en perspective d'un embout d'extrémité à monter au niveau de l'extrémité supérieure d'un tube vertical selon l'invention ;
- la figure 13 est une vue en perspective d'une béquille oblique de rigidification comportant un embout de fixation de béquille à chacun de ses extrémités, lesdits embouts étant chacun engagé dans une forme réceptrice prévue dans un palier de fixation de béquille ;
- la figure 14 est une vue en perspective d'une poutrelle horizontale comportant un embout de fixation de poutrelle à chacune de ses extrémités ;
- la figure 15a est une vue en perspective illustrant l'assemblage d'une béquille oblique de rigidification équipée d'un embout de fixation de béquille dans une forme réceptrice prévue dans un palier de fixation de béquille soudé sur un tube vertical ;
- la figure 15b est une vue en perspective de la béquille oblique de rigidification selon la figure 15a fixée au palier de fixation de béquille du tube vertical ;
- la figure 16a est une vue en perspective illustrant l'assemblage d'une poutrelle horizontale équipée d'un embout de fixation de poutrelle dans une forme réceptrice prévue dans un palier de fixation de poutrelle conformé dans un embout d'extrémité ; et
- la figure 16b est une vue en perspective de la poutrelle horizontale selon la figure 16a fixée à l'embout d'extrémité d'un tube vertical.

### Mode(s) de réalisation de l'invention

Les éléments structurellement et fonctionnellement identiques présents sur plusieurs figures distinctes, sont affectés d'une même référence numérique ou alphanumérique.

Les localisations supérieures et inférieures des différents moyens constitutifs de l'invention sont données en fonction la position adoptée par ces moyens au sein d'une structure tridimensionnelle assemblée.

La structure tridimensionnelle (1) selon l'invention est prévue pour combler un bassin enterré d'infiltration, de rétention et/ou de stockage des eaux de pluie.

La structure tridimensionnelle (1) de l'invention comprend des modules unitaires (2) qui sont mutuellement assemblés en juxtaposition pour former un premier niveau destiné à être posé au sol, puis superposés afin de former les niveaux supérieurs.

Pour les modules unitaires (2) qui sont destinés à être posés au sol la structure tridimensionnelle (1) de l'invention comprend des bases (3) prévues pour équiper la face du dessous des modules unitaires (2) et destinées à être posées au sol sensiblement horizontalement dans le fond du bassin creusé où la structure tridimensionnelle (1) doit être assemblée.

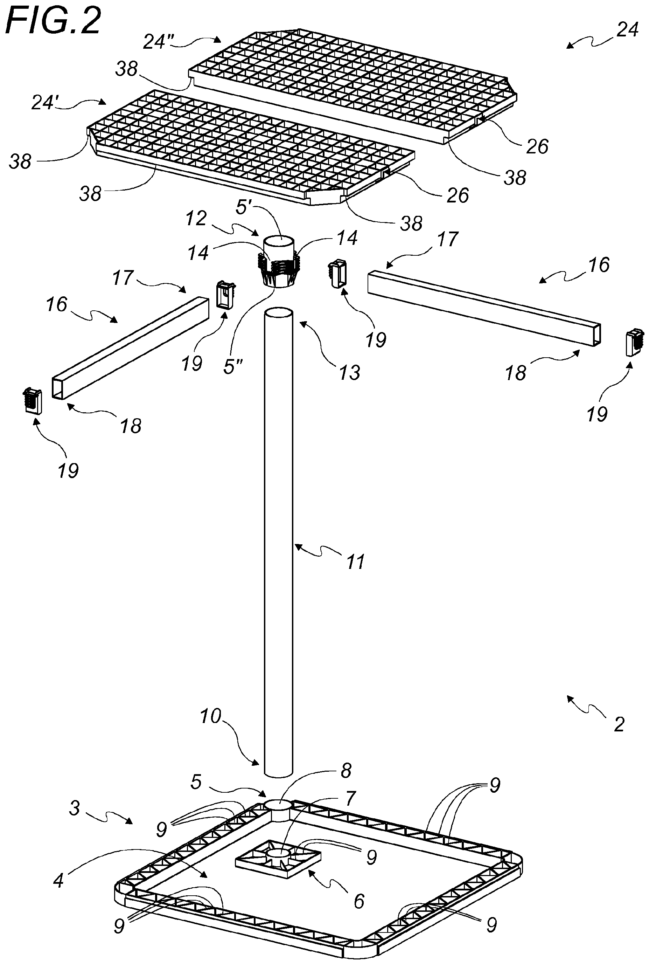

Une telle base (3) est représentée à l'état unitaire sur la figure 2.

Elle comporte au moins un évidement (4) pour laisser passer l'eau et est préférentiellement sous la forme d'un cadre de forme générale rectangulaire et préférentiellement carrée.

Chaque base (3) et comporte également au moins un logement récepteur (5), préférentiellement un seul, dans sa face supérieure. Dans le cas préféré où la base (3) est sous la forme d'un cadre, le logement récepteur (5) est prévu dans un coin dudit cadre.

Ce logement récepteur (5) est préférentiellement sous la forme d'un logement cylindrique prévu pour recevoir un tube vertical dans sa partie supérieure.

Chaque base (3) comprend préférentiellement des structures latérales d'accrochage, par exemple des structures de clipsage ou d'emboîtement, prévues pour permettre l'assemblage latéral mutuel des bases (3) les unes avec les autres. Selon un mode de réalisation préféré de l'invention, non représenté sur les figures, chaque base (3) comprend ainsi des rampes d'accrochage sur deux faces latérales consécutives, tandis que les deux autres faces latérales consécutives présentent des rampes d'accrochage complémentaires prévues pour que des bases (3) situés côte-à-côte puissent être mutuellement assemblées et immobilisées par l'engagement de la rampe d'accrochage d'une base (3) avec la rampe d'accrochage complémentaire de la base (3) voisine.

Afin d'offrir un meilleur appui au sol pour les modules unitaires (2) qui sont destinés à être posés au sol chaque base (3) est préférentiellement équipée d'une semelle (6) présentant une surface inférieure d'appui plane et horizontale montée sous ladite base (3) et solidarisée à celle-ci.

La semelle (6) est préférentiellement prévue au niveau du logement récepteur (5) conformé dans la base (3).

Elle présente préférentiellement une pièce mâle (7) dans sa partie supérieure, prévue pour être introduite dans une pièce femelle (8) complémentaire conformée dans la partie inférieure du logement récepteur (5) afin d'y être logée et immobilisée. Lorsque le logement récepteur (5) est sous la forme d'un logement cylindrique, la partie inférieure dudit logement fait office de pièce femelle (8) et la pièce mâle (7) de la semelle (6) est préférentiellement sous la forme d'une pièce cylindrique.

La base (3) et la semelle (6) sont préférentiellement fabriquées en matière plastique injectée et elles comportent des nervures (9) de renfort et de rigidification.

Le logement récepteur (5) de chaque base (3) est prévu pour loger et immobiliser l'extrémité inférieure (10) d'un tube vertical (11).

En effet, chaque module unitaire (2) comprend un unique tube vertical (11), préférentiellement de forme cylindrique.

Chaque unique tube vertical (11) est de préférence sous la forme d'un tube creux à section ronde en matière composite, par exemple obtenu par pultrusion de fibres de verre continues et de résine.

Chaque module unitaire (2) comprend également un embout d'extrémité (12) prévu pour être fixé au niveau de l'extrémité supérieure (13) du tube vertical (11), cet embout d'extrémité (12) comportant un logement récepteur supérieur (5') conformé dans sa partie supérieure et un logement récepteur inférieur (5") conformé dans sa partie inférieure, ces logements récepteurs (5', 5") étant de forme sensiblement identique au logement récepteur (5) de chaque base (3).

Le logement récepteur (5) de chaque base (3) et le logement récepteur supérieur (5') de chaque embout d'extrémité (12) sont de forme complémentaire à celle de l'extrémité inférieure (10) du tube vertical (11) afin de recevoir l'extrémité inférieure (10) d'un tube vertical (11) en ajustement serré.

De même, le logement récepteur inférieur (5") de chaque embout d'extrémité (12) est de forme complémentaire à celle de l'extrémité supérieure (13) du tube vertical (11) pour être monté en partie supérieure du tube vertical (11).

Ainsi, lorsque chaque tube vertical (11) est de forme cylindrique chaque embout d'extrémité (12) est préférentiellement sous la forme d'une pièce cylindrique, et ses logements récepteurs (5', 5") ainsi que le logement récepteur (5) de chaque base (3) sont également préférentiellement cylindriques.

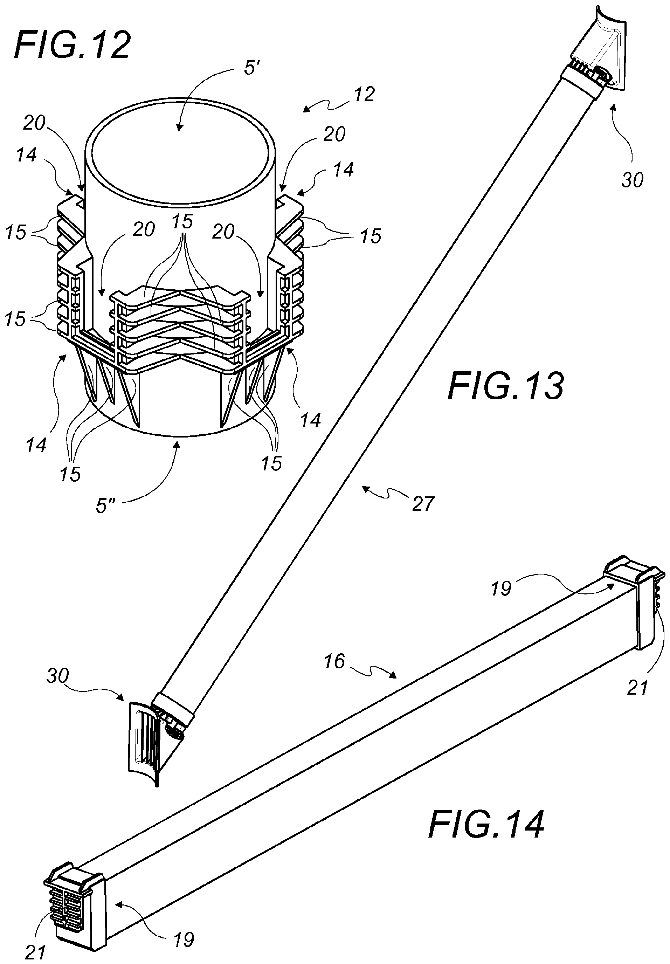

En se référant à la figure 12, chaque embout d'extrémité (12) comporte au moins deux paliers de fixation (14) de poutrelle qui s'étendent radialement vers l'extérieur à partir dudit embout d'extrémité (12). Chaque embout d'extrémité (12) comporte préférentiellement quatre paliers de fixation (14) de poutrelle régulièrement répartis en croix selon un angle de 90° les uns des autres sur le pourtour dudit embout d'extrémité (12).

Chaque embout d'extrémité (12) est préférentiellement obtenu par injection de matière plastique. Il comporte de préférence des nervures (15) de renfort et de rigidification. Ces nervures (15) de renfort et de rigidification sont préférentiellement situées autour de chaque palier de fixation (14) de poutrelle afin de les renforcer.

Chaque module unitaire (2) comprend en outre au moins deux poutrelles (16) horizontales dont une première extrémité (17) est fixée à un palier de fixation (14) de poutrelle du tube vertical (11), tandis que son autre extrémité (18) est destinée à être fixée à un palier de fixation (14) de poutrelle d'un tube vertical (11) d'un autre module unitaire (2) adjacent, ladite poutrelle (16) étant positionnée horizontale entre les deux tubes verticaux (11) ainsi reliés.

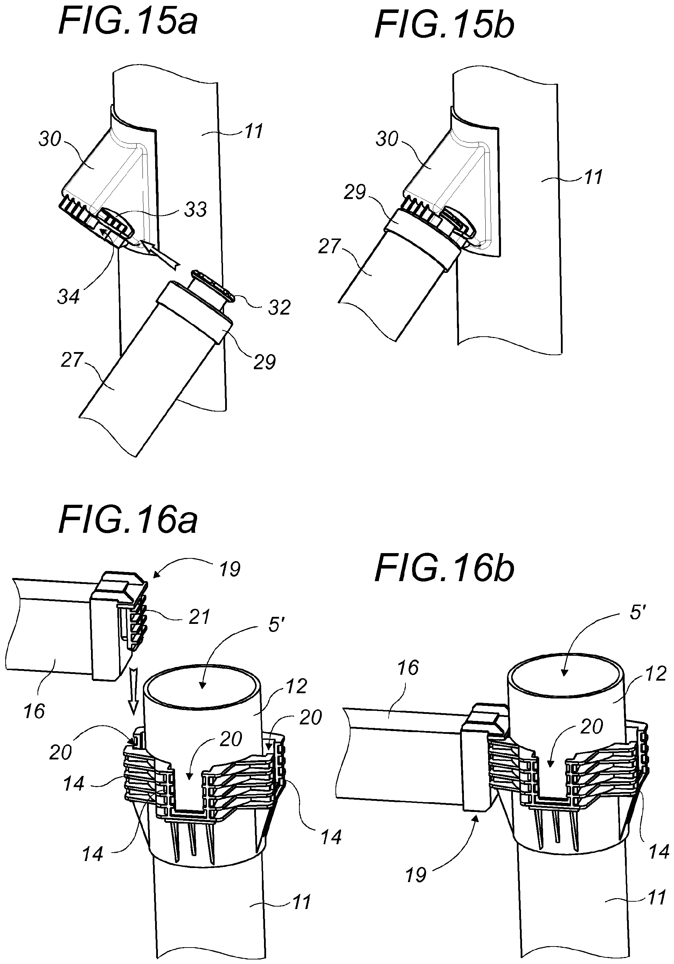

En se référant à la figure 14, chaque poutrelle (16) horizontale comporte préférentiellement un embout de fixation (19) de poutrelle solidarisé à chacune de ses extrémités (17, 18) et prévu pour coopérer avec un palier de fixation (14) de poutrelle d'un embout d'extrémité (12). Chaque poutrelle (16) horizontale permet ainsi de relier deux tubes verticaux (11) au niveau de leur embout d'extrémité (12) respectif comme cela est représenté sur les figures 16a et 16b. Sur ces figures, chaque palier de fixation (14) de poutrelle présente une ouverture (20) dans sa partie supérieure, dans laquelle est introduite une partie en saillie (21) prévue dans chacun des embouts de fixation (19) de poutrelle.

Chaque poutrelle (16) horizontale est de préférence sous la forme d'un tube creux à section rectangulaire en matière composite, par exemple obtenu par pultrusion de fibres de verre continues et de résine.

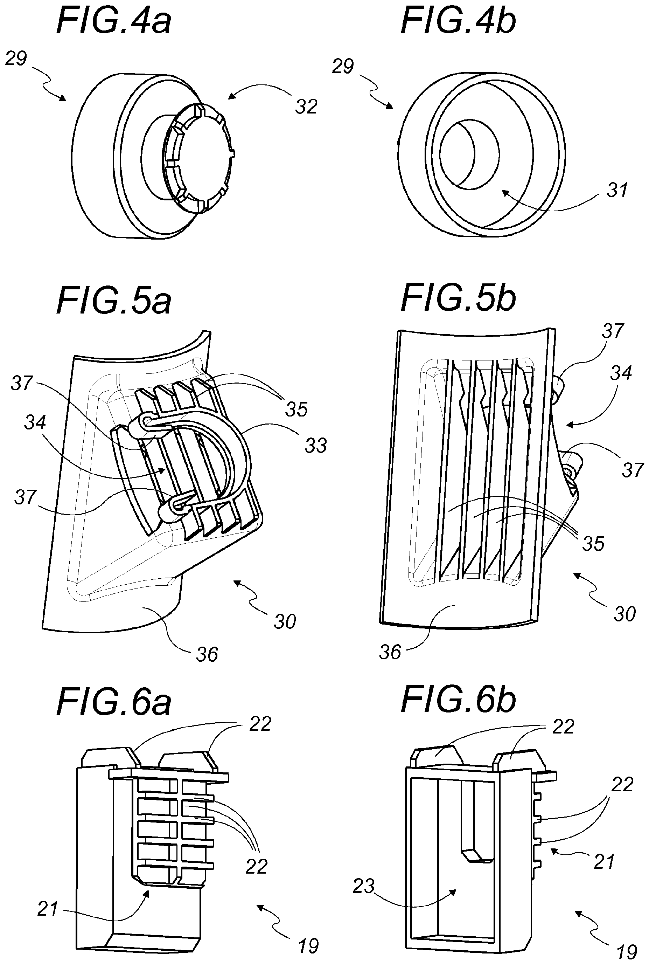

En se référant aux figures 6a et 6b, chaque embout de fixation (19) de poutrelle est préférentiellement fabriqué en matière plastique injectée et comporte des nervures (22) de renfort et de rigidification. Il présente une partie creuse réceptrice (23) prévue pour son montage en ajustement serré et/ou son soudage sur l'extrémité libre d'une poutrelle (16).

Chaque module unitaire (2) comprend enfin au moins une grille (24) positionnée sur les poutrelles (16) horizontales situées afin de constituer un plancher de circulation. La grille (24) est de forme générale rectangulaire et préférentiellement carrée. Elle peut être d'une seule pièce, ou en plusieurs parties (24', 24") juxtaposées. La grille (24) est préférentiellement fabriquée en matière plastique injectée.

La grille (24) est de préférence sous la forme d'une structure alvéolaire prévue pour laisser passer l'eau et comportant une face supérieure plane afin de servir de plancher de circulation pour les personnes chargées d'assembler la structure tridimensionnelle (1) de l'invention.

Chaque grille (24) pour comporter un ou plusieurs inserts (25) de renfort et de rigidification, prévus pour être introduits chacun dans un logement récepteur (26) conformé dans le corps de la grille (24). Le rôle principal de ces inserts (25) est de renforcer la résistance en flexion des grilles (24).

En se référant à la figure 14, chaque insert de renfort et de rigidification (25) est de préférence sous la forme d'un tube creux à section rectangulaire en matière composite, par exemple obtenu par pultrusion de fibres de verre continues et de résine.

Selon une variante préférée de l'invention certains modules unitaires (2) peuvent aussi comprendre une ou plusieurs béquilles obliques (27) de rigidification. Ces béquilles obliques (27) sont préférentiellement prévues au niveau des modules unitaires (2) situés en périphérie de la structure tridimensionnelle (1) pour renforcer sa résistance mécanique, notamment vis-à-vis de la poussée latérale exercée par la masse de terre qui l'entoure lorsque fosse où se trouve la structure tridimensionnelle (1) est comblée avec de la terre.

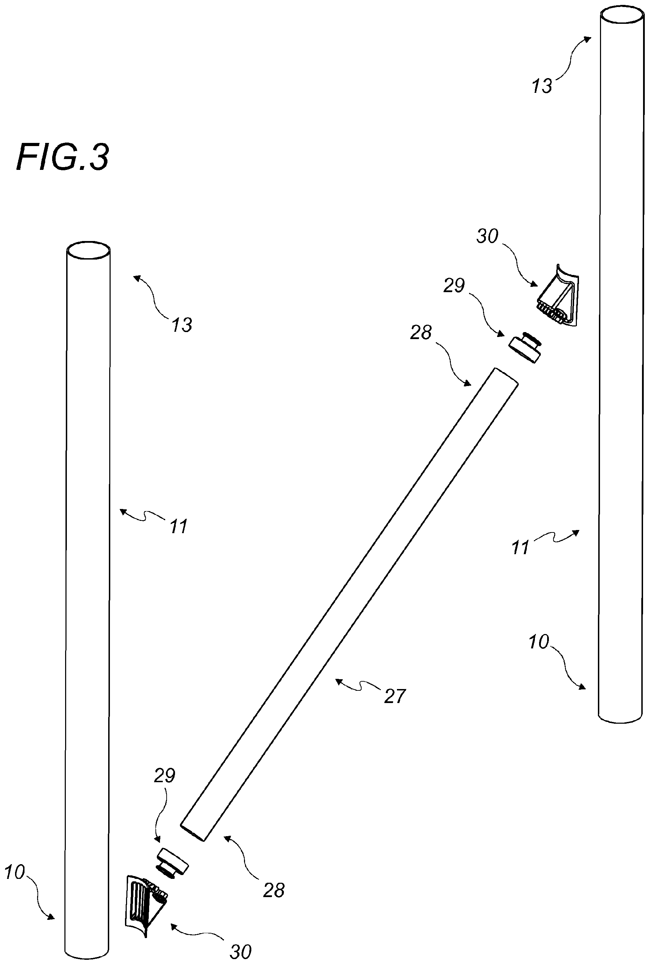

En se référant à la figure 3, chaque béquille oblique (27) est de préférence sous la forme d'un tube creux à section ronde en matière composite, par exemple obtenu par pultrusion de fibres de verre continues et de résine.

Chaque béquille oblique (27) est prévue pour être fixée de manière inclinée sur deux tubes verticaux (11) afin de les relier et les immobiliser mutuellement.

Dans ce but, au niveau de chacune de ses extrémités (28) chaque béquille oblique (27) comporte un embout de fixation (29) de béquille prévu pour coopérer en fixation et immobilisation avec un palier de fixation (30) de béquille prévu sur chacun des deux tubes verticaux (11) qu'elle doit relier. Une béquille oblique (27) équipée d'un embout de fixation (29) de béquille à chacun de ses extrémités (28) est illustrée sur la figure 13.

Chaque béquille oblique (27) est préférentiellement symétrique et ses deux extrémités (28) sont identiques.

En se référant aux figures 4a et 4b, chaque embout de fixation (29) de béquille est préférentiellement fabriqué en matière plastique injectée. Il présente une partie creuse réceptrice (31) prévue pour son montage en ajustement serré et/ou son soudage sur l'extrémité libre (28) d'une béquille oblique (27), et une partie en saillie (32) prévue pour être reçue à immobilisation dans une pièce réceptrice (33) prévue dans chaque palier de fixation (30) de béquille, cette pièce réceptrice (33) présentent préférentiellement une ouverture latérale (34) destinée à recevoir la partie en saillie (32) d'un embout de fixation (29) de béquille (voir figures 15a et 15b) et des moyens de clipsage (37) de celle-ci.

En se référant aux figures 5a et 5b, chaque palier de fixation (30) de béquille est préférentiellement fabriqué en matière plastique injectée. Il présente des nervures de renfort et de rigidification (35), une pièce réceptrice (33) orientée préférentiellement inclinée selon le même angle d'inclinaison des béquilles obliques (27), et une embase (36) destinée à être solidarisée sur le pourtour externe du tube vertical (11), préférentiellement par soudage. L'embase (36) présente préférentiellement une concavité complémentaire de la forme externe du tube vertical (11).

Comme cela apparaît sur la figure 3, chaque béquille oblique (27) étant prévue de manière inclinée entre deux tubes verticaux (11), un premier palier de fixation (30) de béquille doit être prévu sur un premier tube vertical (11), tandis qu'un second palier de fixation (30) de béquille doit être prévu sur un second tube vertical (11) adjacent, à une hauteur différente du premier, cette hauteur dépendant de l'angle d'inclinaison de la béquille oblique (27). Un premier palier de fixation (30) de béquille est préférentiellement prévu dans la partie inférieure d'un premier tube vertical (11), tandis qu'un second palier de fixation (30) de béquille est préférentiellement prévu dans la moitié supérieure d'un second tube vertical (11) adjacent.

L'angle d'inclinaison de chaque béquille oblique (27) est préférentiellement d'environ 45°.

Un même tube vertical (11) peut être équipé d'aucun ou de plusieurs paliers de fixation (30) de béquille selon les besoins pour la structure tridimensionnelle (1).

La grille (24) du module unitaire (2) de l'invention est préférentiellement de forme sensiblement carrée, avec une largeur et une longueur d'environ 1 mètre, ce qui offre une résistance mécanique suffisante pour une grande surface. De manière générale, la grille (24) présente préférentiellement une largeur et une longueur comprises entre 50 centimètres et 150 centimètres.

La hauteur de chaque tube vertical (11) du module unitaire (2) de l'invention peut être variable, car adaptée à la hauteur du bassin enterré d'infiltration, de rétention et/ou de stockage des eaux de pluie prévu. De manière générale, ces tubes peuvent faire jusqu'à 2 mètres de haut sans présenter un risque de flexion excessif. Ils présentent préférentiellement une longueur comprise entre 1,5 et 2 mètres, et plus préférentiellement une hauteur d'environ 1,6 mètre, ce qui permet aux opérateurs de circuler sous les grilles (24).

Ces dimensions permettent avantageusement de créer une structure tridimensionnelle (1) de grandes dimensions avec peu de modules unitaires (2), pour un coût et un temps de pose réduits, tout en offrant une résistance mécanique suffisante en déformation et en compression pour l'ensemble.

De manière connue, la structure tridimensionnelle (1) peut comprendre comprend une géogrille de fermeture (non représentée) qui entoure sa périphérie et dont le maillage est dimensionné de sorte d'empêcher la terre de pénétrer latéralement à l'intérieur de la structure tridimensionnelle (1).

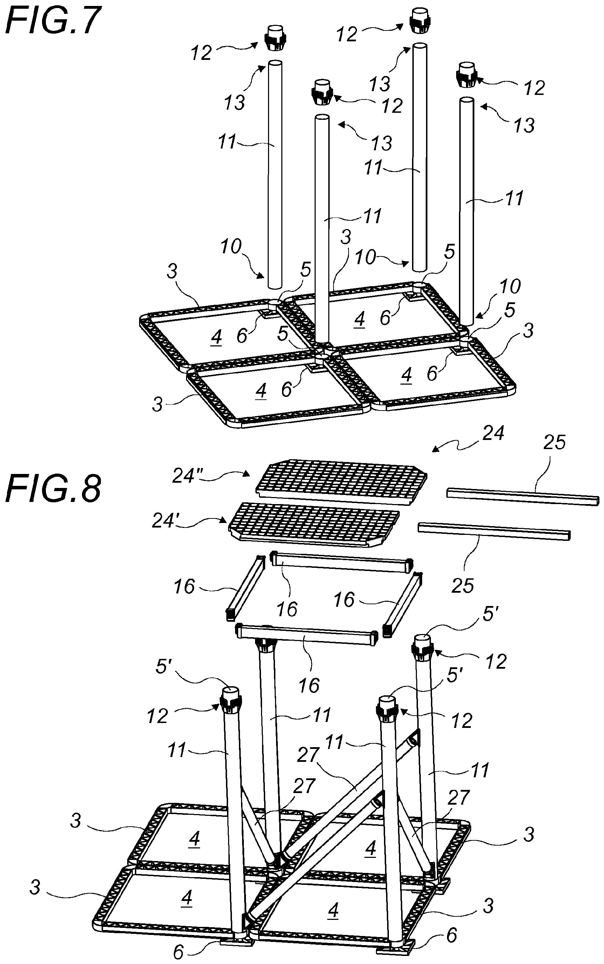

En se référant notamment aux figures 7 à 11, nous allons maintenant nous intéresser aux différentes étapes nécessaires à la conception et l'assemblage d'une structure tridimensionnelle (1) selon un mode de réalisation préféré de l'invention.

Dans un premier temps, au cours d'un travail préparatoire, un ingénieur ou un technicien dimensionne la structure tridimensionnelle (1) et détermine le nombre, la position et l'orientation des différentes béquilles obliques de rigidification (27) nécessaires pour le bassin enterré d'infiltration, de rétention et/ou de stockage des eaux de pluie. Il fournit ainsi un plan de montage spécifique à cette structure tridimensionnelle (1) aux monteurs chargés d'assembler la structure tridimensionnelle (1) sur site.

En usine, en fonction de ces plans, des tubes verticaux sont équipés de paliers de fixation (30) de béquille. Les différents embouts (12, 19, 29) peuvent être pré-montés sur leur élément tubulaire respectif (11, 16, 27). De même, les inserts (25) de renfort et de rigidification peuvent être introduits en usine dans chaque grille (24), et les semelles (6) peuvent être montées en sous-face de chaque base (3).

Ces étapes sont préférentiellement réalisées en usine afin de gagner du temps de montage sur site.

Après transport et déchargement sur site des différents moyens constitutifs de la structure tridimensionnelle (1), alors que la fosse réceptrice pour cette structure tridimensionnelle (1) a déjà été creusée et aplanie, les monteurs commencent par positionner les bases (3) au sol, chacune étant préférentiellement équipée d'une semelle (6). Ces bases (3) sont mutuellement assemblées et immobilisées par assemblage de leurs rampes d'accrochage et de leurs rampes d'accrochage complémentaires respectives. Elles forment alors une sorte de dallage plat et perméable à l'eau prévu dans le fond du bassin qui servira d'embase pour les modules unitaires (2) qui seront assemblés dessus.

Un tube vertical (11) est alors logé et immobilisé par son extrémité inférieure (10) dans le logement récepteur (5) de chaque base (3), et un embout d'extrémité (12) en engagé au niveau de l'extrémité supérieure (13) de chaque tube vertical (11) si cela n'avait pas été fait préalablement en usine (voir figure 7).

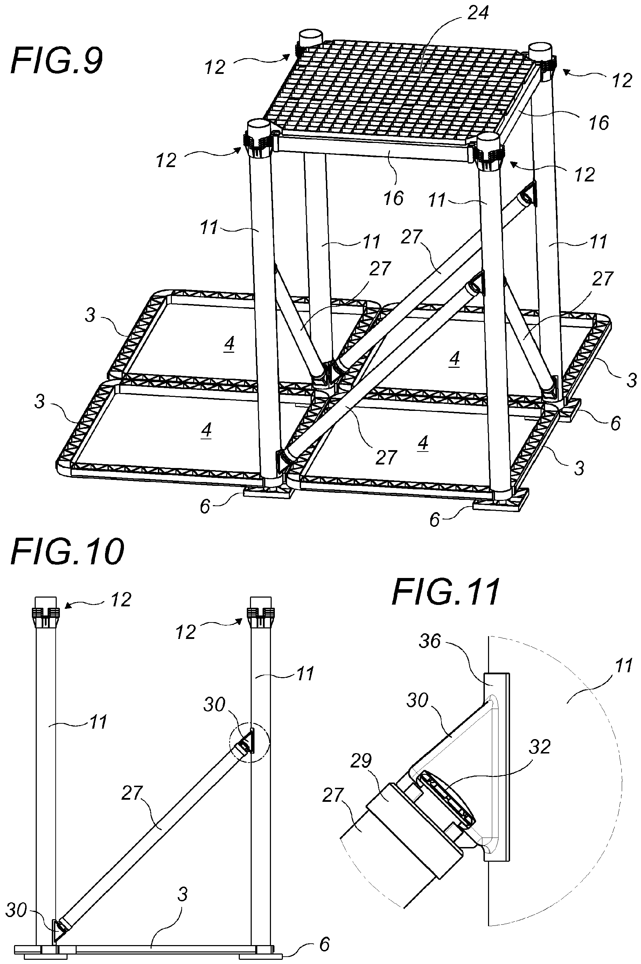

Les monteurs fixent ensuite les béquilles obliques de rigidification (27) par clipsage entre les tubes verticaux (11) où cela est nécessaire. La sécurisation par clipsage d'une béquille oblique de rigidification (27) sur un tube vertical (11) est représentée sur les figures 15a et 15b. Une béquille oblique de rigidification (27) immobilisée entre deux tubes verticaux (11) est également représentée de profil sur les figures 10 et 11.

Les monteurs fixent aussi les poutrelles (16) horizontales, à raison d'une poutrelle (16) entre chaque paire de tubes verticaux (11) adjacents de manière à former un cadre horizontal de support pour les grilles (24), ce cadre étant préférentiellement de forme similaire à celui de la base (3) située en dessous et situé dans un même volume vertical. La sécurisation par clipsage d'une poutrelle (16) sur l'embout d'extrémité (12) d'un tube vertical (11) est représentée sur les figures 16a et 16b. Les grilles (24) équipées des inserts (25) sont alors posées sur ces cadres. Chaque grille (24) est préférentiellement immobilisée en calage entre quatre poutrelles (16) horizontales formant un cadre par l'appui d'une gorge (38) sur le chant supérieur des poutrelles (16), cette gorge (38) étant conformée dans la partie inférieure du pourtour de chaque grille (24) (voir figure 8).

Lorsque les modules unitaires (2) qui sont destinés à être posés au sol ont été assemblés, les grilles (24) des modules unitaires (2) déjà assemblés forment un plancher sur lequel les monteurs peuvent librement circuler pour d'assembler les modules unitaires (2) suivant afin d'ajouter un niveau de modules unitaires (2) supplémentaire en hauteur pour la structure tridimensionnelle (1).

Cet assemblage est très similaire au précédent. La seule différence réside dans le fait qu'un tube vertical (11) n'est pas monté dans le logement récepteur (5) des bases (3), mais qu'un tube vertical (11) est logé et immobilisé dans le logement récepteur inférieur (5") de chaque embout d'extrémité (12) des tubes verticaux (11) situés en dessous.

La structure tridimensionnelle (1) selon l'invention peut comporter plusieurs étages. Les embouts d'extrémité (12) en partie supérieur des tubes verticaux (11) permettent d'insérer les tubes verticaux (11) de l'étage suivant.

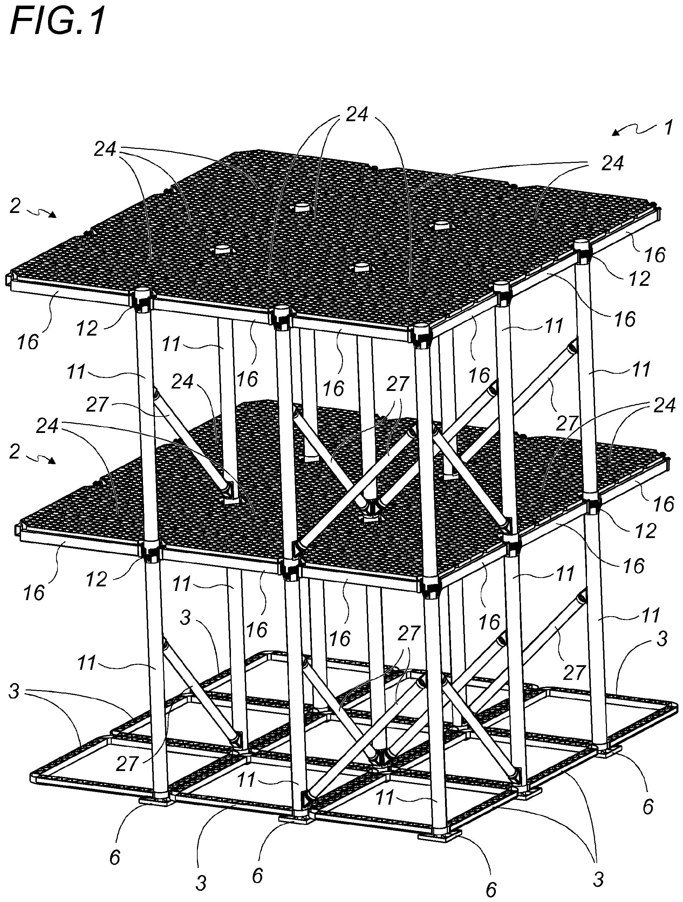

Ainsi, bien que la figure 1 illustre une structure tridimensionnelle (1) comportant seulement deux niveaux de modules unitaires (2), elle peut en comporter un nombre quelconque, voire éventuellement un seul niveau.

Afin d'adapter la hauteur de la structure tridimensionnelle (1), avantageusement seule la hauteur des tubes verticaux (11) doit être adaptée en conséquence.

Une fois la structure tridimensionnelle (1) assemblée, sa conformité au plan de montage spécifique peut être vérifiée et validée avant qu'une géogrille de fermeture (non représentée) soit mise en place sur sa périphérie.

On notera qu'au sein de chaque module unitaire (2), le tube vertical (11), l'embout d'extrémité (12), chaque poutrelle (16), chaque grille (24), chaque palier de fixation (30) de béquille et chaque béquille oblique (27) de rigidification sont des moyens préférentiellement dissociés, c'est-à-dire des moyens distincts qui sont prévus pour être mutuellement assemblés pour le montage de la structure tridimensionnelle (1). Ainsi, préférentiellement, aucun de ces moyens n'est conformé d'une seule pièce avec un autre de ces moyens.

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention tel que défini par les revendications annexées et une étape décrite de mise en oeuvre du procédé peut être remplacée par une étape équivalente sans sortir du cadre de l'invention tel que défini par les revendications.

## Revendications

1. Structure tridimensionnelle (1) comprenant des modules unitaires (2) mutuellement assemblés en juxtaposition et/ou superposition afin de former une masse poreuse en vue de constituer un bassin d'infiltration, de rétention et/ou de stockage des eaux de pluie, **caractérisée en ce qu'**elle comprend des bases (3) destinées à être posées au sol sensiblement horizontalement, une base (3) équipant la partie inférieure de chaque module unitaire (2) prévu pour être posé directement au sol afin de servir d'embase d'appui au sol pour celui-ci, et **en ce que** chaque module unitaire (2) comporte les moyens dissociés suivants, qui sont prévus pour être assemblés mutuellement pour le montage de la structure tridimensionnelle (1) :
• un unique tube vertical (11) dont l'extrémité inférieure (10) est prévue pour être logée et immobilisée dans la partie supérieure d'un logement récepteur (5, 5'), ce logement récepteur (5, 5') étant :
- soit conformé dans une base (3) d'un module unitaire (2) lorsque celui-ci est destiné à être directement posé au sol,
- soit conformé dans un embout d'extrémité (12) prévu au niveau de l'extrémité supérieure (13) du tube vertical (11) d'un autre module unitaire (2) situé en-dessous lorsque le module unitaire (2) est destiné à être monté au-dessus d'un autre module unitaire (2) ;
• un embout d'extrémité (12) prévu pour être monté sur l'extrémité supérieure (13) du tube vertical (11) et comportant au moins deux paliers de fixation (14) de poutrelle qui s'étendent radialement vers l'extérieur à partir dudit embout d'extrémité (12) ;
• au moins deux poutrelles (16) horizontales dont une première extrémité (17) est fixée à un palier de fixation (14) de poutrelle du tube vertical (11), tandis que son autre extrémité (18) est destinée à être fixée à un palier de fixation (14) de poutrelle d'un tube vertical (11) d'un autre module unitaire (2) adjacent, ladite poutrelle (16) étant positionnée horizontale entre les deux tubes verticaux (11) ainsi reliés ;
• au moins une grille (24) positionnée sur les au moins deux poutrelles (16) horizontales afin de constituer un plancher de circulation.

2. Structure tridimensionnelle (1) selon la revendication 1, **caractérisée en ce que** chaque module unitaire (2) comporte en outre les moyens dissociés suivants prévus pour être assemblés mutuellement pour le montage de la structure tridimensionnelle (1) :
• au moins un palier de fixation (30) de béquille solidarisé sur le pourtour externe du tube vertical (11) ;
• au moins une béquille oblique (27) de rigidification dont une première extrémité (28) est fixée à un palier de fixation (30) de béquille du tube vertical (11), tandis que son autre extrémité (28) est destinée à être fixée à un palier de fixation (30) de béquille du tube vertical (11) d'un autre module unitaire (2) adjacent, ladite béquille oblique (27) étant positionnée inclinée entre les deux tubes verticaux (11) ainsi reliés.

3. Structure tridimensionnelle (1) selon la revendication 2, **caractérisée en ce qu'**un tube vertical (11) comprend au moins un palier de fixation (30) de béquille au niveau de son extrémité inférieure (10) et/ou au moins un palier de fixation (30) de béquille au niveau de sa moitié supérieure.

4. Structure tridimensionnelle (1) selon la revendication 2 ou 3, **caractérisée en ce qu'**au moins un palier de fixation (30) de béquille est solidarisé sur un tube vertical (11) par soudage ou par collage.

5. Structure tridimensionnelle (1) selon l'une quelconque des revendications 2 à 4, **caractérisée en ce qu'**au moins une béquille oblique (27) de rigidification comporte un embout de fixation (29) de béquille solidarisé à au moins une de ses extrémités (28) et prévu pour coopérer avec une forme réceptrice prévue dans un palier de fixation (30) de béquille.

6. Structure tridimensionnelle (1) selon l'une quelconque des revendications précédentes, **caractérisée en ce qu'**au moins une poutrelle (16) horizontale comporte un embout de fixation (19) de poutrelle solidarisé à au moins une de ses extrémités (17, 18) et prévu pour coopérer avec un palier de fixation (14) de poutrelle d'un embout d'extrémité (12).

7. Structure tridimensionnelle (1) selon l'une quelconque des revendications précédentes, **caractérisée en ce que** la base (3) équipant la partie inférieure de chaque module unitaire (2) prévu pour être posé directement au sol présente un évidement (4) et comporte un logement récepteur (5) dans sa face supérieure.

8. Structure tridimensionnelle (1) selon l'une quelconque des revendications précédentes, **caractérisée en ce que** la base (3) équipant la partie inférieure de chaque module unitaire (2) prévu pour être posé directement au sol comporte une semelle (6) présentant une surface inférieure d'appui plane et horizontale montée sous ladite base (3) et solidarisée à celle-ci.

9. Structure tridimensionnelle (1) selon la revendication 8, **caractérisée en ce que** la semelle (6) est prévue au niveau du logement récepteur (5) conformé dans la base (3) destinée à être posée au sol.

10. Structure tridimensionnelle (1) selon la revendication 8 ou 9, **caractérisée en ce que** la semelle (6) comporte une pièce mâle (7) dans sa partie supérieure, prévue pour être introduite dans une pièce femelle (8) complémentaire conformée dans la partie inférieure du logement récepteur (5) afin d'y être logée et immobilisée.

11. Structure tridimensionnelle (1) selon l'une quelconque des revendications précédentes, **caractérisée en ce que** la base (3) équipant la partie inférieure de chaque module unitaire (2) prévu pour être posé directement au sol est sous la forme d'un cadre de forme générale rectangulaire et préférentiellement carrée.

12. Structure tridimensionnelle (1) selon l'une quelconque des revendications précédentes, **caractérisée en ce que** la base (3) équipant la partie inférieure de chaque module unitaire (2) prévu pour être posé directement au sol comporte des structures de clipsage, des structures d'emboîtement ou tout autre type de structures d'accrochage, ces structures d'accrochage étant prévues pour assembler les bases (3) de deux modules unitaires (2) adjacents lorsqu'elles sont mutuellement associées.

13. Structure tridimensionnelle (1) selon l'une quelconque des revendications précédentes, **caractérisée en ce que** la base (3) équipant la partie inférieure de chaque module unitaire (2) prévu pour être posé directement au sol comporte un unique logement récepteur (5) pour la réception de l'unique tube vertical (11) du module unitaire (2) prévu pour être posé au sol.

14. Structure tridimensionnelle (1) selon l'une quelconque des revendications précédentes, **caractérisée en ce que** la grille (24) est de forme générale rectangulaire et préférentiellement carrée, et est d'une seule pièce ou en plusieurs parties (24', 24") juxtaposées.

15. Structure tridimensionnelle (1) selon l'une quelconque des revendications précédentes, **caractérisée en ce qu'**elle comprend au moins un tube vertical (11), au moins une béquille (27) et/ou au moins une poutrelle (16) en matériau composite, de préférence obtenu(e) par pultrusion de fibres de verre continues et de résine.

16. Structure tridimensionnelle (1) selon l'une quelconque des revendications précédentes, **caractérisée en ce qu'**elle comprend au moins un embout d'extrémité (12), au moins une base (3), au moins une semelle (6), au moins un palier de fixation (30) de béquille, au moins un embout de fixation (29) de béquille, au moins un embout de fixation (19) de poutrelle et/ou au moins une grille (24) en matière plastique injectée.

17. Structure tridimensionnelle (1) selon l'une quelconque des revendications précédentes, **caractérisée en ce que** chaque embout d'extrémité (12) comporte quatre paliers de fixation (14) de poutrelle régulièrement répartis à un angle de 90° les uns des autres sur le pourtour dudit embout d'extrémité (12).
